# EUROPEAN PATENT SPECIFICATION

(11) **EP 2 417 498 B1**
(45) Date of publication and mention of the grant of the patent: **05.06.2013**
(21) Application number: 10723303.3
(22) Date of filing: 06.04.2010
(51) Int. Cl.: G05B 19/408

(54) **METHOD FOR AUTOMATICALLY PARTITIONING A PART PROGRAM INTO FUNDAMENTAL OPERATIONS**
VERFAHREN ZUM AUTOMATISCHEN AUFTEILEN EINES TEILPROGRAMMS IN GRUNDOPERATIONEN
PROCÉDÉ SERVANT À PARTITIONNER AUTOMATIQUEMENT UNE PARTIE D'UN PROGRAMME DANS DES OPÉRATIONS FONDAMENTALES

(30) Priority: 07.04.2009 IT VI20090080
(43) Date of publication of application: 15.02.2012
(73) Proprietor: Politecnico di Milano, 20133 Milano (IT)
(72) Inventor: TOLIO, Tullio, I-20149 Milano (IT); COBIANCHI, Paolo, Maria, I-27014 Corteolona (PV) (IT); MORIGGI, Paolo, I-20034 Giussano (MI) (IT)
(74) Representative: Ciceri, Fabio
(86) International application number: PCT/IB2010/001041
(87) International publication number: WO 2010/116265

(56) References cited:
- EP-A- 1 065 029
- WO-A-2007/078025
- JP-A- 8 339 215

## Description

### FIELD OF THE INVENTION

The present invention relates to the field of Computerized Numerical Control (CNC) machine tools. In particular, the present invention relates to the field of machining programs ("part programs") for Computerized Numerical Control machine tools. Still more in particular, the present invention relates to the problem of converting a traditional machining program, having linear character, into a non-linear program. The present invention concerns therefore the automatic identification of the individual machining operations within a determined machining part program for Computerized Numerical Control machine tools. In particular, the machining instructions ("G-code instructions") associated to each machining operation performed in order to obtain a finished or a semi-finished product starting from a raw piece are identified. In detail, the method according to the present invention is able to identify those G-code instructions which set the removal of material by means of tools, thus modifying the original geometry of the raw piece. Moreover, the present invention relates to the association of the geometric information regarding the recognized features of the finished product to the machining operations and, consequently, to the G-code instructions.

### STATE OF THE ART

Within the wide context of the machining processes for material removal from metal components, the present invention relates to machining processes realized by means of Computerized Numerical Control (CNC) machine tools. The principle behind the Computerized Numerical Control systems specifically relates to electronic devices able to read and interpret several instructions and to drive the appropriate tools along paths so as to remove portions of material from a raw piece.

All the instructions necessary to realize the machining process, the so-called G-codes, are contained in one or more textual files which are uploaded into the memory of the computerized numerical control of the machine. These files are loaded before starting the machining process of the product they relate to. The whole set of files that the numerical control has to run represents the part program. The part program can be generated either manually by a programmer or automatically by a CAM (Computer Aided Manufacturing) system. Various attempts to standardize the format of the G-codes instructions have been made in the United States since the early 1960's by the Electronic Industries Alliance, coming to a final version approved in 1980 with the name RS274D. The International Organization for Standardization acknowledged the format of the data contained in RS274D and proposed in 1982 the standard ISO 6983/1. Nevertheless, almost none of the CNC manufactures have completely conformed to the ISO 6983/1 standard. This is due to the fact that the growing complexity of the operations required from machine tools has not been accompanied by appropriate updates of the programming language required by the standard and to the fact that in the past the demand for interoperability of CNC systems was limited. Most of the CNC manufacturers have added their own extensions and variations to the type of language required by the standard, especially for the representation of those instructions relating to the transformation of systems of reference or to the employment of auxiliary functions of the machine tool. Moreover, during the last decade, no changes have been introduced in the way the part programs are generated and used. The current part program generation method requires that the various instructions are indicated according to a linear sequence within the part program itself, so that the numerical control can read the part program row by row and the machine tool can execute the instructions specified in each row. This linear nature of the part program implies, however, several drawbacks, especially at the shop floor level.

When the technologist decides the operations sequence to be run within a specific process plan, he introduces only technological precedence constraints among the operations (for instance he sets the execution of a roughing operation before a finishing operation, a drilling operation before a threading operation, and so on). Other precedence constraints are implicitly introduced only because of the necessity of specifying a set of operations in a linear sequence. Accordingly, this static and strictly sequential nature characterizing the set of operations leads to the impossibility of eventually changing the original processing order of the machining operations, while satisfying all the same the technological precedence constraints. Another relevant feature linked to the actual way of reading and running a part program relates to the poor visibility and the poor control on the sequence of machining operations. Since the part program is a monolithic entity wherein all the machining operations, implicitly represented by the G-code instructions, cannot be distinguished from each other, there is a limited possibility to effectively react to unpredictable events. For instance, if one of the tools gets damaged during the machining operations, it could be a good solution to go on performing other operations that do not require the same tool, instead of aborting the whole part program. At the same time an interrupted part program should be recovered without the need of the manual intervention of an operator who reads the part program and specifies the row from which the CNC has to start processing again.

Recently, during the 1990s, a different way of representing part programs for CNC machine tools has been introduced. According to this different approach, the machining cycle (referred to also as "non linear process plan") is not bound to any aspect concerning its execution and administration so that the corresponding part program is only characterized by effective precedence technological constrains among the machining operations. This allows overcoming a series of drawbacks originating from the sequential nature of the current machining programs for CNC machine tools. The part program is, in fact, no longer represented by files which codify a single static sequence of instructions, but the possibilities of representing the process according to several alternate sequences and of choosing the effective sequence of operations necessary for the machining of the piece later on, during the operational reading and running steps of the program, arise. The key unity in the ambit of this new approach is the fundamental machining operation. This entity is characterized by the instructions about the path that the tool has to follow once it is in contact with the raw piece in order to remove material from it so as to create the geometric features of the finished or semi-finished piece. From the industrial point of view, this new approach gains more and more consents in the last years; several users of machine tools and of integrated machining systems realize the potential benefits that such an approach can guarantee (such as a shorter time for planning the part program and an easier management of the production plant). Nevertheless, for these mechanical companies, the problem arises of efficiently converting the machining programs employed at present so as to employ them whenever the new approach is adopted without having to re-program them entirely again. The analysis of a part program with the aim of identifying in it the instructions concerning the individual operations represent a manual activity which, nowadays, beside requiring a non negligible execution time, needs also highly qualified staff provided with high experience and competence in the field of CNC machining.

Other techniques, such as techniques concerning the STEP-NC programming, are addressed toward an improvement of the continuity of the information in the CAD-CAM-CNC chain, allowing the obtainment of advantages comparable to those achievable by means of non-linear part programs, however they are not directly applicable to numerical controls existing at present. These systems require in fact industrious and expensive adjustments and modifications for reading and interpreting STEP-NC part programs. The patent application WO2007/078025A1, for example, concerns a method for converting a traditional part program into a part program according to the STEP-NC format. The running of a part program in the STEP-NC format requires the implementation of relevant modifications in the software of the CNC as the STEP-NC format can not be interpreted and run by machine tools provided with a traditional numerical control. The method according to the present invention, therefore, differs from the state of the art in that the codified information of the original part program is not translated into another language, but it is unbundled and taken back to the level of the fundamental operations, and it can be directly interpreted and run by the same CNC system employed for running the original part program.

### SCOPE OF THE PRESENT INVENTION

In the light of the problems concerning the conversion of traditional machining programs for numeric controlled machines into programs having a different design, scope of the present invention is that of providing a system and a method allowing overcoming said problems.

In particular, scope of the present invention is that of providing a system and a method allowing the identification of the machining instructions ("G-code instructions") concerning the operations performed in a part program for CNC machine tools in a quick and easy way. Moreover, scope of the present invention is that of providing a system and a method allowing the identification of said instructions present in a part program independently from the specific architecture of the CNC machine tool. In particular, scope of the present invention is that of providing an output which can be directly used by the machine itself, without necessity of implementing hardware or software modifications of the configuration in use.

### SUMMARY OF THE INVENTION

The present invention relates to a system and a method for automatically identifying the individual machining operations performed according to a part program for computerized numerical control machine tools and the corresponding G-code instructions performed according to said part program. The present invention is based on the general idea of performing simulations based on said part program and of identifying the operations and the corresponding G-code instructions on the basis of the detection of the occurrence of contacts between the models of the tools employed and the models of the volumes forming the geometric features realized on the machined piece.

According to a particularly advantageous embodiment of the present invention, a method for automatically identifying the machining operations performed according to a part program and of the corresponding G-code instructions contained in said part program is provided, comprising the following steps:
a) providing said part program;
b) providing a machining tool library comprising the geometric properties of the tools employed by the CNC machine for which said part program has been written;
c) providing a 3D model of the machined part;
d) identifying geometric features of the machined part by evaluating said 3D model;
e) simulating the execution of said part program so as to detect the occurrence of contacts between said tools and each of said geometric features based on the geometric properties of the tools as specified by said machining tool library;
f) determining the machining operations and the corresponding G-code instructions contained in said part program on the basis of the detection of contacts performed in step e).

According to a further embodiment of the present invention, a method for automatically identifying the machining operations performed according to a part program and of the corresponding G-code instructions contained in said part program is provided, further comprising providing a 3D model of the raw piece and determining said 3D model of the machined part on the basis of a simulation of the material removal process on said 3D model of the raw piece, said simulation of the material removal process being performed on the basis of said part program and said machining tool library.

According to a further embodiment of the present invention, a method for automatically identifying the machining operations performed according to a part program and of the corresponding G-code instructions contained in said part program is provided, further comprising generating a 3D model of each of the identified geometric features.

According to a further embodiment of the present invention, a method for automatically identifying the machining operations performed according to a part program and of the corresponding G-code instructions contained in said part program is provided, further comprising performing joint checks on the 3D models of each of said geometric features so as to distinguish the geometric features characterized by intersecting volumes so as to remove the volume of material in common from the 3D models of said geometric features characterized by intersecting volumes.

According to a further embodiment of the present invention, a method for automatically identifying the machining operations performed according to a part program and of the corresponding G-code instructions contained in said part program is provided, further comprising computing the volume of material removed from each geometric feature during each individual contact with the tools so as to solve possible conflicts deriving from the simultaneous occurrence of a contact between a tool and two or more geometric features, the G-code instruction that determined the multiple contact being assigned to the machining operation relating to the geometric feature for which the volume of removed material is higher.

According to a further embodiment of the present invention, a method for automatically identifying the machining operations performed according to a part program and of the corresponding G-code instructions contained in said part program is provided, further comprising assigning an inspection file containing a set of information concerning the specific geometry of each of said identified geometric features and the position and the orientation of said geometric features.

According to a particularly advantageous embodiment of the present invention, a system for the identification of the machining operations performed according to a part program and of the corresponding G-code instructions contained in said part program is provided, comprising a management module adapted to receive in input said part program, a machining tool library specifying geometric properties of the tools employed by the CNC machine for which said part program has been written and a 3D model of the machined part, and to output said machining operations performed according to said part program and said G-code instructions corresponding to said machining operations; and a volumetric module adapted to evaluate said 3D model of the machined part so as to identify the geometric features of the machined part; to simulate the execution of said part program so as to detect the occurrence of contacts between said tools and each of said geometric features based on the geometric properties of the tools as specified by said machining tool library; to determine the machining operations and the corresponding G-code instructions contained in said part program on the basis of the detection of contacts between said tools and each of said geometric features.

According to a further embodiment of the present invention, a system for the identification of the machining operations performed according to a part program and of the corresponding G-code instructions contained in said part program is provided, further comprising a volumetric module adapted to receive in input a 3D model of the raw piece and further comprising a machining simulation unit adapted to simulate the material removal process on said 3D model of the raw piece on the basis of said part program and said machining tool library so as to determine said 3D model of the machined part.

According to a further embodiment of the present invention, a system for the identification of the machining operations performed according to a part program and of the corresponding G-code instructions contained in said part program is provided, comprising a volumetric module further adapted to generate a 3D model of each of said geometric features.

According to a further embodiment of the present invention, a system for the identification of the machining operations performed according to a part program and of the corresponding G-code instructions contained in said part program is provided, comprising a volumetric module further adapted to perform joint checks of the 3D models of each of said geometric features so as to distinguish the geometric features characterized by intersecting volumes and to perform reciprocal boolean subtractions among the volumes of said geometric features characterized by intersecting volumes so as to delete the common volume of material from the 3D models of said geometric features characterized by intersecting volumes.

According to a further embodiment of the present invention, a system for the identification of the machining operations performed according to a part program and of the corresponding G-code instructions contained in said part program is provided, comprising a volumetric module further adapted to compute the volume of material removed from each geometric feature during each individual contact with the tools and further comprising a report analysis unit adapted to solve potential conflicts deriving from the simultaneous occurrence of a contact between a tool and two or more geometric features, assigning the G-code instruction that determined the multiple contact to the machining operation corresponding to the geometric feature for which the volume of material removed is higher.

According to a particularly advantageous embodiment of the present invention, a system for the identification of the machining operations performed according to a part program and of the corresponding G-code instructions contained in said part program is provided, comprising a management module further adapted to assign an inspection file containing a set of information concerning the specific geometry of each of said identified geometric features and the position and the orientation of said geometric features.

### BRIEF DESCRIPTION OF THE DRAWINGS

Figure 1 represents the main steps that, starting from the Input Data, allow the method to provide the Output Data according to a particular embodiment of the present invention.
Figure 2 represents the general architecture of the invented method according to a particular embodiment of the present invention.
Figure 3 shows the first flow of analysis of the invented method according to a particular embodiment of the present invention, wherein the involved sub-modules receive data in input and provide an intermediate output.
Figure 4 shows the second flow of analysis of the invented method according to a particular embodiment of the present invention, wherein the involved sub-modules receive the intermediate output provided by the first flow described in Figure 3 and provide the final output.

### DETAILED DESCRIPTION

In the following, the present invention is described with reference to particular embodiments as shown in the enclosed Figures. Nevertheless, the present invention is not limited to the particular embodiments described in the following detailed description and shown in the Figures, but rather, the described embodiments simply exemplify several aspects of the present invention whose scope is defined by the claims.

Further modifications and variations of the present invention will be clear to the person skilled in the art. The present description has to be considered, therefore, as comprising all said modifications and/or variations of the present invention whose scope is defined by the claims.

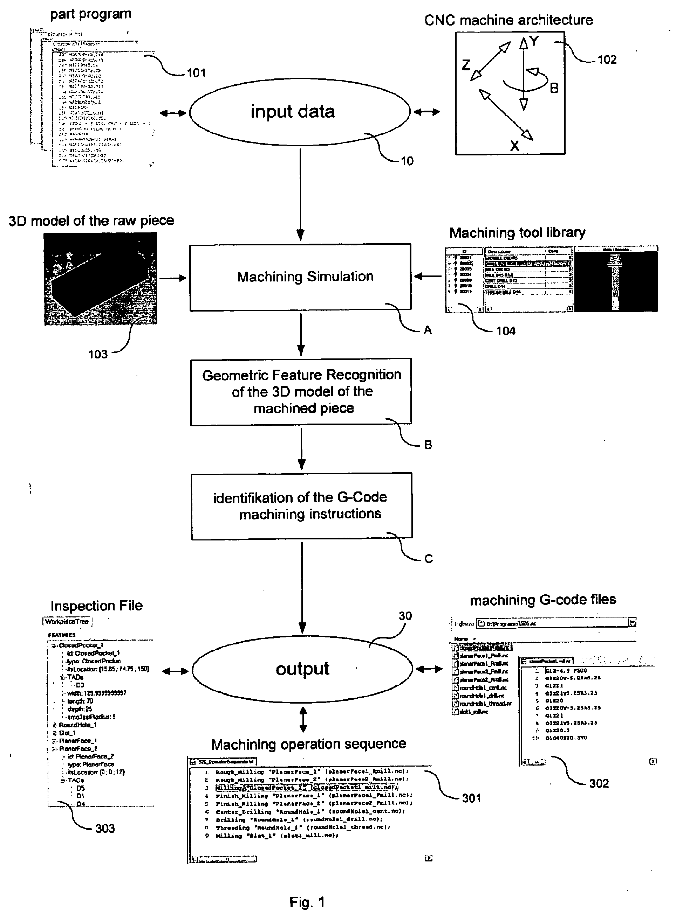

Figure 1 schematically shows the three main steps performed according to a particular embodiment of the present invention. At first, on the basis of the input data 10 (in the case shown in Figure 1, the part program 101 and the CNC machine architecture 102) and other secondary information (the 3D model of the raw piece 103 and the machining tool library 104), a machining simulation is run (step A). The goal of this first step is the generation of a detailed model of the machined piece comprising the information concerning the geometric features realized by means of the different machining operations.

Alternatively, if an adequate 3D model of the finished piece is already available, this first machining simulation is not necessary, because there is no need of generating these geometric features.

At this stage, a geometric features recognition process of the geometric features of the 3D model of the machined piece or, alternatively, of the 3D model of the finished piece is performed (step B). The goal of this task is double. Firstly, the geometric information concerning each of the geometric features recognized according to certain standards are generated, secondly, adequate 3D models corresponding to these geometric features are generated. Within the ambit of this invention, the wording "geometric feature" refers to a geometric entity of a finished piece characterized by the fact of having been generated by means of the removal of a certain volume of material from the raw piece. Non-exhaustive examples of geometric features comprise, for example, plane faces, pockets, grooves, steps, holes and extruded sections (for a comprehensive description of such geometric features it is possible to refer to the ISO 14649-10 norm).

Finally, the identification of the G-code instructions is achieved by means of further machining simulations which allow obtaining matches between the 3D models of the geometric features, the machining operations necessary for obtaining said geometric features and the G-codes present in the part program 101 (step C).

The output 30 of the method is represented by the machining operations sequence 301, i.e. the sequence of operations realized according to the part program and the corresponding machining operation G-code files 302, which contain the G-code instructions representing the paths of the tools associated to each machining operation. Moreover, the method provides the inspection file 303 that contains a set of information regarding the geometries of the various geometric features together with their positions and orientations.

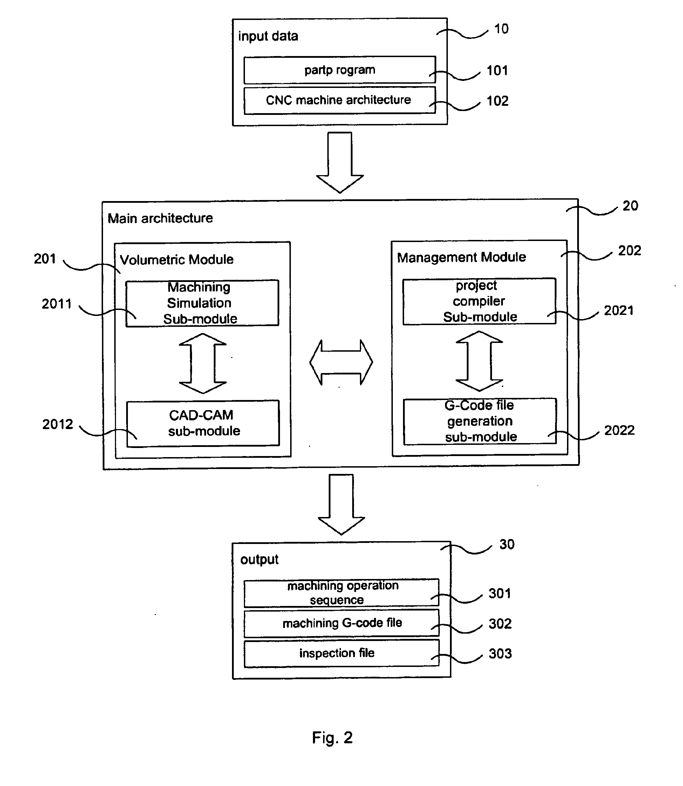

Figure 2 shows the general architecture of the method according to a particular embodiment of the present invention. The main architecture 20 receives the input data 10 comprising the part program 101 and the CNC machine architecture 102. The main architecture 20 comprises two modules, the volumetric module 201 and the management module 202. The volumetric module 201 is mainly aimed at performing simulation and computation tasks employing three-dimensional geometries. The volumetric module 201 comprises the machining simulation sub-module 2011 and the CAD-CAM sub-module 2012.

The machining simulation sub-module 2011 allows the interpretation of the part program 101 and the simulation of the process of removal of material from the three-dimensional model of the raw piece 103 by means of the geometry of the tools described in the machining tool library 104.

The CAD-CAM sub-module 2012 is used to recognize the geometric features of the three-dimensional model after the machining simulation and to generate the three-dimensional models forming said geometric features.

The management module 202 aims at performing management tasks such as managing the information exchange between the various sub-modules and contains "the intelligence" of the whole method. The management module 202 comprises the project compiler sub-module 2021 and the G-code file generation sub-module 2022.

The project compiler sub-module 2021 allows starting the method, managing all the information needed in one or more project entities and managing the inputs/outputs between the various sub-modules.

The G-code file generation sub-module 2022 is able to carry out an integrated analysis of the intermediate outputs of the various sub-modules during the run of the method.

At the end, the main architecture 20 provides the output 30. In particular the main architecture 20 outputs the machining operation sequence 301, the machining G-code files 302 containing the instructions that represent the paths of the tools associated to each machining operation and the inspection file 303 containing the information regarding the specific geometry, the position and the orientation of each of the geometric features.

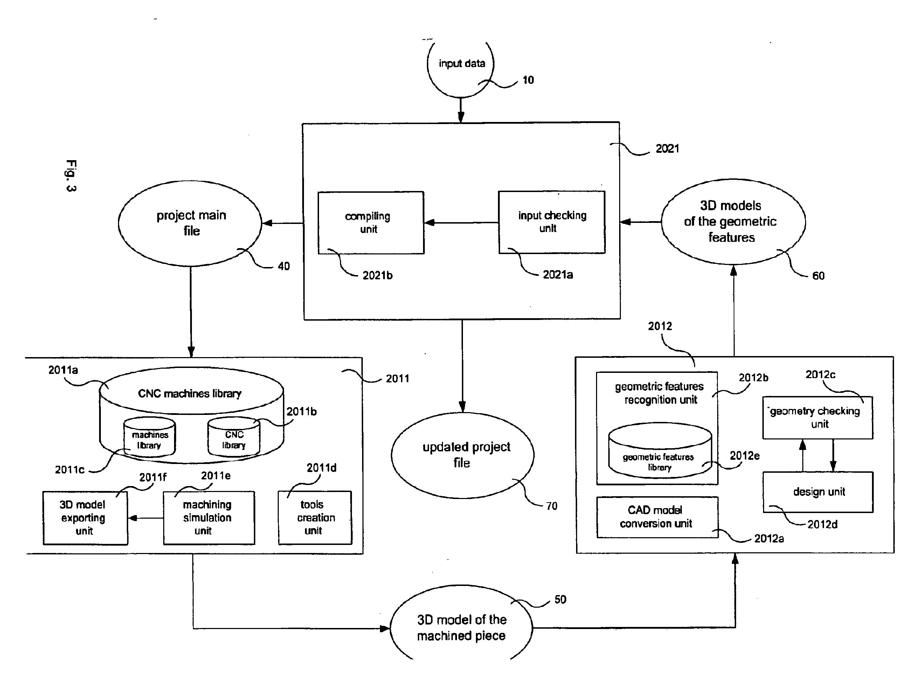

In Figure 3, the first part of the flow of analysis performed according to a particular embodiment of the present invention is schematized. At the beginning, the output data 10 are managed by the project compiler sub-module 2021. The project compiler sub-module 2021 comprises two units, the input checking unit 2021a and the compiling unit 2021 b.

In particular, the CNC machine architecture 102 is firstly analyzed by the input checking unit 2021a. The input checking unit 2021a compares the information contained in the CNC machine architecture 102 with the content of the CNC machines library 2011a included in the machining simulation sub-module 2011, in order to identify the correct virtual architecture for specifically interpreting and simulating the part program 101.

In particular, the CNC machines library 2011a comprises the CNC library 2011b and the machines library 2011 c. The CNC library 2011 b contains CNC emulators. Each CNC emulator is represented by a textual file wherein the words the CNC has to interpret as well as the functions that have to be performed while reading the part program, are declared. In particular, specific CNC emulation files for the most diffused CNC models (for instance for "GE Fanuc", "Siemens", "NUM", "Heidenhain", and so on) are present so as to be able to interpret basically all the possible G-code part programs.

The machine library 2011 c comprises several machine configurations. Also in this case there are specific textual files representing several available machine configurations. For instance there are representations of three axes, four axes and five axes machines, with horizontal or vertical spindle and considering all the possible topological configurations. According to the specific CNC machine architecture 102, the suitable architecture (the machine combined to the CNC) is therefore selected from the CNC machine library 2011a.

Once the input data 10 have been checked, other secondary information are added and checked for the running the simulation. In particular, both the 3D model of the raw piece 103 and the machining tool library 104 are checked by the input checking unit 2021a. With respect to the 3D model of the raw piece 103, if necessary, the input checking unit 2021 a may use the CAD model conversion unit 2012a of the CAD-CAM sub-module 2012 in order to convert those formats of the 3D model of the raw piece which are not compatible into a format which is compatible with the format required by the machining simulation sub-module 2011.

The content of the machining tool library 104 (in particular the information regarding tool lengths, tool diameters, tool types and number of teeth of each tool) is analyzed and converted into a format which can be read by the machining simulation sub-module 2011. Said machining tool library is typically represented by a textual file which can be directly downloaded from the numerical control of the machine tool.

On the other hand, if the machining tool library 104 is manually codified on a simple paper sheet, the input checking unit 2021 a allows using the tools creation unit 2011d, contained in the machining simulation sub-module 2011, in order to create said file.

The tools creation unit 2011d manages the definition of all the tools which have to be contained into the machining tool library 104. In particular, the various tools are codified by an ID number (identification number which represents the number of the tool referred to by the part program 101), and they are characterized by a certain length, diameter, number of cutting teeth and the tool type (for instance a flat mill, a round mill, a ball mill, a drill, or a profiled tool defined by an appropriate set of geometric parameters).

At this stage, the compiling unit 2021 b performs the assembly of the information coming from the input checking unit 2021a. All these information are properly written by the compiling unit 2021 b in the project main file 40 which is a textual file. The project main file 40 is characterized by a tree structure of the information and defines a precise simulation scheme wherein, in the appropriate level of the hierarchical structure, the path of the files containing the input information is specified. The project main file 40 represents one of the intermediate outputs produced by the project compiler sub-module 2021 and the intermediate input for the machining simulation sub-module 2011.

Using the information specified in the project main file 40, the machining simulation unit 2011e included in the machining simulation sub-module 2011 carries out the machining simulation. In particular, the machining simulation unit 2011e is provided with a kinematic kernel which reads the part program, interprets it by means of the CNC emulator, and moves the axes of the virtual machine in order to simulate the path followed by the real tools. Therefore the G-code instructions specified in the part program 101 are interpreted and translated into tool-paths or machining functions so that the tools specified in the machining tool library 104 remove portions of material from the 3D model of the raw piece 103. After the part program 101 has been entirely processed by the machining simulation unit 2011e, the result of the machining simulation, i.e. the 3D model of the machined part, is available.

Nevertheless, this new solid model does not contain yet information necessary for carrying out the method and needs, therefore, to be exported in a format containing the information concerning the geometric features generated. The three-dimensional model of the machined part is thus taken in charge by the 3D model exporting unit 2011f. The 3D model exporting unit 2011f performs the export of the geometric features generated and allows obtaining a 3D model of the machined part 50 from the machining simulation sub-module 2011.

The 3D model of the machined part 50 represents the intermediate input of the CAD-CAM sub-module 2012.

As already indicated, if an appropriate 3D model of the finished part is available, even alternatively to the 3D model of the raw piece 103, it is not necessary to perform the machining simulation described so far, because the information regarding the geometric features of the machined part can be directly extracted also from the three-dimensional model of the finished part.

The main goal of the CAD-CAM sub-module 2012 consists in recognizing the abovementioned geometric features and in generating specific 3D models for each of these features. The 3D model of the machined part 50 or, alternatively, the 3D model of the finished part is taken in input by the CAD-CAM sub-module 2012a, wherein the geometric features recognition unit 2012b performs semiautomatic recognition of the geometric features.

Most of the geometric features are easily recognized and the information about their geometries are automatically generated according to the geometric features library 2012e included in the feature recognition unit 2012b. The geometric features library 2012e is a collection of classification schemes employed to classify the geometric features recognized on the basis of certain standards typically employed for representing and exchanging data concerning products (e.g. ISO 14649-10 standard or ISO 10303-AP238 standard, to mention the most common ones).

The geometric feature recognition unit 2012b works in an integrated manner with the geometry checking unit 2012c and the design unit 2012d. As soon as a geometric feature is recognized, the relative information is transferred to the design unit 2012d, where a 3D model representing the solid volume of the geometric feature is generated. When all such solid models are created, the geometry checking unit 2012c performs a joint check on them, with the aim of distinguishing the geometric features characterized by intersecting volumes (for instance, two holes that penetrate each other are characterized by a common volume of material). If some of the features having this property are found by the geometry checking unit 2012c, they are sent back to the design unit 2012d in order to perform reciprocal boolean subtractions between their volumes. In this way, the common volume of material between two or even more features is removed from the 3D model of each feature. The aim is to define each geometric feature of the piece with the most accurate volume of material.

Once the three-dimensional models associated to the different machined geometric features have been designed, checked and eventually adjusted, the CAD-CAM sub-module 2012 stores them in a convenient file format (e.g. the same format used to represent the 3D model of the raw piece 103 during the machining simulation). Therefore, the intermediate output of the CAD-CAM sub-module 2012 is composed by the 3D models of the geometric features 60, i.e. by a list of files in which the information regarding the geometry of the geometric features are contained. Each of the three-dimensional models is stored using the same coordinate reference system that characterizes the 3D model of the machined part 50; this is done in order to effectively represent the volume of material associated to a feature in a specific position and to easily manage the subsequent steps of the method of the present invention. The 3D models of the geometric features 60 represent also the intermediate input for the project compiler sub-module 2021 that closes the first loop of the method according to a particular embodiment of the present invention. At this stage, the compiling unit 2021 b takes care again of the project main file 40, updates it with the information generated in the first analysis loop and adds other parameters necessary to carry out the further steps of the method. Therefore, the intermediate output of the compiling unit 2021b is the updated project main file 70. The information regarding the 3D models of the geometric features 60 are inserted into the updated project main file 70 by the compiling unit 2021, and other relevant properties which let the machining simulation unit 2011e track the contacts between the various tools and the 3D models of the geometric features 60 are specified.

The steps of the method according to the particular embodiment of the present invention described up to now are performed as schematized in Figure 3 in order to obtain both the information necessary to define the geometry of each geometric feature of the product and the three-dimensional models representing the solid volume of said geometric features. Furthermore, the first flow of analysis ends with the generation of the updated project main file 70, wherein all the necessary information for carrying on the method are automatically written by the compiling unit 2021b.

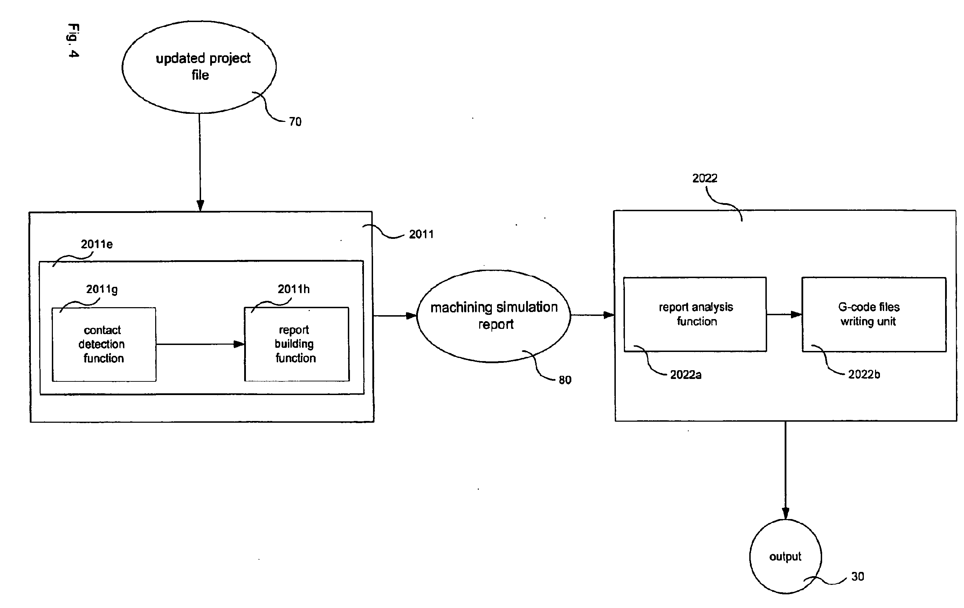

The second flow of the analysis performed according to a particular embodiment of the present invention is schematized in Figure 4. In this second cycle, the machining simulation unit 2011 e uses the information stored in the updated project main file 70 for running new machining simulations. The goal of these new machining simulations is to detect, during the execution of the part program 101, the occurrence of contacts between the various geometric features (whose solid volumes are represented by the 3D models of the geometric features 60) and the various tools (whose geometries are specified in the machining tool library 104). The process is supported by the contact detection function 2011 g of the machining simulation unit 2011e. The contact detection function 2011g allows to identify when two specific elements reach a certain relative distance during the machining simulation. In particular, this function is used to identify when a tool interferes with the 3D model of a geometric feature, removing material from it. Because of the properties set in the updated project main file 70, the activation of the contact detection function 2011g allows the machining simulation unit 2011e to store both the individual G-code instruction that causes a contact and the measure of the volume removed from the geometric feature. For example, the contact detection function 2011g can recognize the following situation: "tool ID 7" comes into contact with geometric feature "round hole 1" removing "252,4187 unities of material" while performing the instruction "G98G81R2Z-3.5K0". In this way, the contact detection function 2011 g considers only those G-code instructions that originate an effective contact between the tools and the volumes of the geometric features. It is exactly in this way that it is possible to precisely identify the G-codes linked to the machining operations starting from the part program 101. The contact detection function 2011 g works in an integrated manner with the report building function 2011 h. Every time a contact between a geometric feature and a tool is detected by the contact detection function 2011g, the latter reads from the part program 101 the G-code instruction that has caused this contact, associates it to a progressive number and stores it, together with the name of the tool involved, the name of the geometric feature involved and the volume of material removed, in an appropriate temporary file.

After the second machining simulation cycle, the information stored in the temporary file is written in the machining simulation report 80 by the report building function 2011h. The machining simulation report 80 is a textual file wherein all the information regarding what has happened during this second machining simulation are stored. Further information, besides the information previously provided by the temporary file, are written in the machining simulation report 80: for each contact tool/geometric feature, the actual value of some technological parameters is stored (approaching speed of the tool, speed and rotation direction of the spindle, employment of lubricant-cooling liquid, and so on).

The machining simulation report 80 represents the new intermediate output of the machining simulation sub-module 2011 and the input of the G-code file generation sub-module 2022.

The final task of the invented method is performed by means of the G-code file generation sub-module 2022, comprising the report analyzing unit 2022a and the G-code file writing unit 2022b. The machining simulation report 80 is taken in input by the report analyzing unit 2022a i n order to select the necessary information, to rebuild its correct flow and to solve potential conflicts present in the data stored. In order to obtain the real sequence of machining operations, the report analyzing unit 2022a analyzes all the contacts present in the machining simulation report 80, which are ordered and stored in a new temporary file employing the information given by the progressive number stored during the second simulation cycle. During the ordering phase of the contacts, conflicts deriving from the fact that a certain G-code instruction has determined a simultaneous interference between a certain tool and two or more geometric features can arise, so that in the machining simulation report 80 the same G-code instruction (identified by the same progressive number) is present as many times as the number of geometric features involved. Since a certain G-code instruction must be univocally associated to one and only one fundamental machining operation, only the G-code instance correspondent to the operation relating to the geometric feature for which the removal of a volume of material has been higher among all the various instances of the same G-code instruction is kept, while the other instances are ignored. This kind of situation could arise, for instance, because of some programmed extra-runs according to which, during the approach and separation phases, the tool enters into contact not only with the geometric feature to machine but also with one or more geometric features adjacent thereto.

At the end, the new temporary file comprising the sequence of G-code instructions is taken in charge by the G-code file writing unit 2022b. The G-code file writing unit 2022b reads this sequence from the beginning and creates a textual file for every machining operation until the end of the sequence of G-code instructions is reached. Each textual files contains the G-code instructions needed to perform the given machining operation.

The G-code file generation sub-module 2022 returns the output 30, i.e. the machining operation sequence 301 and the related machining operation G-code files 302. Moreover, the G-code file generation sub-module 2022 enriches the set of information characterizing each geometric feature also with the related machining operations and provides the features inspection file 303 as a further output. All these information represent the final output of the method.

### ADVANTAGES OF THE INVENTION

The present invention allows to identify, in a generic part program for CNC machining, the machining operations that, under the guise of G-code instructions, are used to remove material from a raw piece in order to create the various geometric features of a finished or semi-finished part.

The method described in the present invention represents the first step toward the conversion of a linear part program, thus having a sequential nature in the representation of the machining instructions, into a non linear part program. In particular, the method according to the present invention provides in output the real sequence of machining operations executed according to the original part program along with the G-code files associated to each machining operation. A G-code file is a textual file comprising the G-code instructions adapted to run a determined fundamental machining operation and, thus, comprising a little portion of the original part program.

Moreover, the method provides in output, on the basis of certain representation standards, a set of information regarding the geometric features of the machined part and some important technological parameters (approaching speed of the tool, speed and rotation direction of the spindle, employment of lubricant-cooling liquid, and so on) which characterize each machining operation. The aim is to combine the G-code instructions characterizing the various machining operations with the information regarding the specific geometry each machining operation generates on the raw piece and the technological parameters employed by the operations themselves.

The method of the present invention identifies the G-code instructions that cause a contact between the volume of a tool and that of one of the geometric features of the part by means of appropriate machining simulations of the original part program. In case of multiple contacts, i.e. in the case a single G-code instruction simultaneously determine a contact of a tool with two or more geometric features, it is reasonably assigned to the fundamental operation concerning the geometric feature for which the volume of removed material has been higher.

On one side, the possibility of simulating any part program, written accordingly to a given CNC specification, allows the method to provide an output that is still compliant with said CNC specification. On the other side, the searched G-code instructions, i.e. those instructions causing a contact between the tool and the piece, are typically represented by that part of the G-code vocabulary which better adheres to the standards (for instance G01, G02, and so on). Therefore the invention allows the interoperability of the systems because several of the identified G-code instructions are directly executable even on CNC configurations which are different from those given in input.

The possibility of clearly identifying the G-code instructions corresponding to the various machining operations supports moreover both the preservation and the update of the part programs. For instance, the possible modifications of the part program performed during the try-out phases could be detected and returned to the technical departments taking care of the generation of the part program, in order to avoid any loss of time for the performing in the future the same activity. Otherwise, it is highly probable that these modifications or updates of the instructions contained in a part program would be lost and would require, in the future, other tests on the same part program or on a similar part program. Moreover, since any modification in the product's geometric features often requires also a modification of the corresponding tool path, this kind of situation could be easily managed by the programming departments only acting on the G-code files involved in the modification, without need for taking into consideration the entire part program.

Few input information are finally required for executing the method according to the present invention. Moreover, these information are easily found in the technical and programming departments or even at the shop floor level because they are essential data for realizing even the most common machined parts. This allows saving the overall time necessary for obtaining the output data and at the same time allows to increase the effective applicability of the invention and its employment in the industrial practice. Moreover, each step performed by the method is characterized by a high automation level so as to minimize the necessity of manual interventions. The invention allows therefore the easy and quick realization of an activity which usually requires remarkable experience and waste of time.

## Claims

1. Method for automatically identifying the machining operations performed according to a part program (101) and the corresponding G-code instructions contained in said part program (101), said method comprising the following steps:
a) providing said part program (101);
b) providing a machining tool library (104) specifying the geometric properties of the tools employed by the CNC machine for which said part program (101) has been written;
c) providing a 3D model (50) of the machined part;
**characterized in that:**
said method further comprises the following steps:
d) identifying geometric features of the machined part by evaluating said 3D model (50);
e) simulating the execution of said part program (101) so as to detect the occurrence of contacts between said tools and each of said geometric features based on the geometric properties of the tools as specified by said machining tool library (104);
f) determining the machining operations and the corresponding G-code instructions contained in said part program (101) on the basis of the detection of contacts performed in step e).

2. Method according to claim 1,
**characterized in that:**
said step c) comprises:
c1) providing a 3D model of the raw piece (103);
c2) determining said 3D model (50) of the machined part on the basis of a simulation of the material removal process on said 3D model of the raw piece (103), said simulation of the material removal process being performed on the basis of said part program (101) and said machining tool library (104).

3. Method according to one of claims 1 or 2,
**characterized in that:**
said step d) further comprises:
d1) generating a 3D model (60) of each of said geometric features.

4. Method according to claim 3,
**characterized in that:**
said step d) further comprises:
d2) performing joint checks on the 3D models of each of said geometric features so as to distinguish the geometric features **characterized by** intersecting volumes;
d3) performing reciprocal boolean subtractions among the volumes of said geometric features **characterized by** intersecting volumes so as to remove the common volume of material from the 3D models of said geometric features **characterized by** intersecting volumes.

5. Method according to one of claims 1 to 4,
**characterized in that:**
said step e) further comprises:
e1) identifying each of the G-code instructions of said part program (101) which causes a contact between at least one of said tools and at least one of said geometric features.

6. Method according to claim 5,
**characterized in that:**
said step e) further comprises:
e2) for each G-code instruction identified in said step e1), computing the volume of material removed from the geometric feature during the contact with the tool.

7. Method according to claim 5,
**characterized in that:**
said step e) further comprises:
e3) storing each of said G-code instructions identified in said step e1) in a temporary file together with the information about the volume of material removed as computing in said step e2), the tool and the geometric feature involved in the contact.

8. Method according to one of claims 1 to 7,
**characterized in that:**
said step f) further comprises:
f1) assigning the possible G-code instruction which causes a concurrent contact between a given tool and two or more geometric features to the machining operation concerning that geometric feature **characterized by** the greatest volume of material removed.
f2) determining a feature inspection file (303) comprising a set of information regarding the geometric specification as well as the position and the orientation of each of said geometric features identified in step d).

9. Method for converting a traditional linear part program (101) into a non linear part program,
**characterized in that:**
said method comprises identifying the machining operations performed according to said traditional linear part program (101) and the corresponding G-code instructions contained in said traditional linear part program according to the method of one of claims 1 to 7.

10. System adapted to identify the machining operations performed according to a part program and the corresponding G-code instructions contained in said part program, wherein said system is adapted to receive in input said part program (101), a machining tool library (104) specifying geometric properties of the tools employed by the CNC machine for which said part program (101) has been written and a 3D model (50) of the machined part;
**characterized in that:**
said system comprises a volumetric module (201) adapted to:
> evaluate said 3D model (50) of the machined part so as to identify the geometric features of the machined part;
> simulate the execution of said part program (101) so as to detect the occurrence of contacts between said tools and each of said geometric features based on the geometric properties of the tools as specified by said machining tool library (104);
**and in that:**
said system comprises a management module (202) adapted to:
> determine the machining operations and the corresponding G-code instructions contained in said part program (101) on the basis of the detection of contacts between said tools and each of said geometric features;
> output said machining operations and said corresponding G-code files with the G-code instructions identified in said part program (101).

11. System according to claim 10,
**characterized in that:**
said volumetric module (201) is further adapted to receive in input a 3D model of the raw piece (103) and said volumetric module (201) further comprises a machining simulation unit (2011 e) adapted to simulate the material removal process on said 3D model of the raw piece (103) on the basis of said part program (101) and said machining tool library (104) so as to determine said 3D model (50) of the machined part.

12. System according to one of claims 10 or 11,
**characterized in that:**
said volumetric module (201) is further adapted to generate a 3D model (60) of each of said geometric features.

13. System according to claim 12,
**characterized in that:**
said volumetric module (201) further comprises a geometry checking unit (2012c) adapted to perform joint checks of the 3D models of each of said geometric features so as to distinguish the features **characterized by** intersecting volumes and a design unit (2012d) adapted to perform reciprocal boolean subtractions among the volumes of said geometric features **characterized by** intersecting volumes so as to delete the common volume of material from the 3D models of said geometric features **characterized by** intersecting volumes.

14. System according to one of claims 10 to 13,
**characterized in that:**
said volumetric module (201) further comprises a machining simulation unit (2011 e) adapted to identify each of the G-code instructions of said part program (101) which causes the occurrence of a contact between at least one of said tools and at least one of said geometric features.

15. System according to claim 14,
**characterized in that:**
said machining simulation unit (2011e) is further adapted to compute, for each identified G-code instruction, the volume of material removed from the geometric feature during the contact with the tool.

16. System according to claim 14,
**characterized in that:**
said machining simulation unit (2011e) is further adapted to store each of said G-code instructions in a temporary file together with the information about the computed volume of material removed, the tool and the geometric feature involved in the contact.

17. System according to one of claims 10 to 16,
**characterized in that:**
said management module (202) further comprises a G-code file generation submodule (2022) adapted to: assign the possible G-code instruction which causes a concurrent contact between a given tool and two or more geometric features to the machining operation concerning that geometric feature **characterized by** the greatest volume of material removed; determine a feature inspection file (303) comprising a set of information regarding the geometric specification as well as the position and the orientation of each of said geometric features of said 3D model (50) of the machined part.

18. System for the conversion of a traditional linear part program (101) into a non linear part program,
**characterized in that:**
said system comprises a system adapted to identify the machining operation performed according to said traditional linear part program (101) and the corresponding G-code instructions according to one of claims 10 to 17.

## Patentansprüche

1. Verfahren zum automatischen Identifizieren der Maschinenbearbeitungsvorgänge, die gemäß einem Teileprogramm (101) und den entsprechenden in diesem Teileprogramm (101) enthaltenen G-Code-Befehlen ausgeführt werden, wobei dieses Verfahren die folgenden Schritte umfasst:
a) Bereitstellen solches Teileprogramms (101);
b) Bereitstellen einer Bearbeitungswerkzeugbibliothek (104), welche die geometrischen Eigenschaften der Werkzeuge angibt, die von der CNC-Maschine verwendet werden, für die das Teileprogramm (101) geschrieben wurde;
c) Bereitstellen eines 3D-Modells (50) des Werkstücks;
**dadurch gekennzeichnet, dass:**
dieses Verfahren ferner die folgenden Schritte umfasst:
d) Identifizieren der geometrischen Merkmale des Werkstücks durch Auswerten des 3D-Modells (50);
e) Simulieren der Ausführung des Teileprogramms (101), um das Vorkommen von Kontakten zwischen den Werkzeugen und jedem der geometrischen Merkmale auf der Grundlage der geometrischen Eigenschaften der Werkzeuge, wie sie von der Bearbeitungswerkzeugbibliothek (104) spezifiziert werden, festzustellen;
f) Bestimmen der Maschinenbearbeitungsvorgänge und der entsprechenden in dem Teileprogramm (101) enthaltenen G-Code-Befehle auf der Grundlage der in Schritt e) vorgenommenen Feststellung von Kontakten.

2. Verfahren nach Anspruch 1,
**dadurch gekennzeichnet, dass:**
der Schritt c) Folgendes umfasst:
c1) Bereitstellen eines 3D-Modells des Rohlings (103);
c2) Bestimmen des 3D-Modells (50) des Werkstücks auf der Grundlage einer Simulation des Materialabtragungsprozesses an dem 3D-Modell des Rohlings (103), wobei diese Simulation des Materialabtragungsprozesses auf der Grundlage des Teileprogramms (101) und der Bearbeitungswerkzeugbibliothek (104) durchgeführt wird.

3. Verfahren nach einem der Ansprüche 1 oder 2,
**dadurch gekennzeichnet, dass:**
der Schritt d) ferner Folgendes umfasst:
d1) Erzeugen eines 3D-Modells (60) von jedem der geometrischen Merkmale.

4. Verfahren nach Anspruch 3,
**dadurch gekennzeichnet, dass:**
der Schritt d) ferner Folgendes umfasst:
d2) Ausführen von gemeinschaftlichen Prüfungen an den 3D-Modellen von jedem der geometrischen Merkmale, um die geometrischen Merkmale zu unterscheiden, die durch sich überschneidende Volumina gekennzeichnet sind;
d3) Ausführen von gegenseitigen booleschen Subtraktionen unter den Volumina der durch sich überschneidende Volumina gekennzeichneten geometrischen Merkmale, um das gemeinsame Materialvolumen von den 3D-Modellen dieser durch sich überschneidende Volumina gekennzeichneten geometrischen Merkmale zu entfernen.

5. Verfahren nach einem der Ansprüche 1 bis 4,
**dadurch gekennzeichnet, dass:**
der Schritt e) ferner Folgendes umfasst:
e1) Identifizieren von jedem der G-Code-Befehle des Teileprogramms (101), der einen Kontakt zwischen mindestens einem der Werkzeuge und mindestens einem der geometrischen Merkmale bewirkt.

6. Verfahren nach Anspruch 5,
**dadurch gekennzeichnet, dass:**
der Schritt e) ferner Folgendes umfasst:
e2) Berechnen für jeden in Schritt e1) identifizierten G-Code-Befehl des von dem geometrischen Merkmal während des Kontakts mit dem Werkzeug abgetragenen Materials.

7. Verfahren nach Anspruch 5,
**dadurch gekennzeichnet, dass:**
der Schritt e) ferner Folgendes umfasst:
e3) Speichern von jedem der in Schritt e1) identifizierten G-Code-Befehle zusammen mit den Informationen über das gemäß der Berechnung in Schritt e2) abgetragene Materialvolumen, das Werkzeug und das von dem Kontakt betroffene Werkzeug in einer temporären Datei.

8. Verfahren nach einem der Ansprüche 1 bis 7,
**dadurch gekennzeichnet, dass:**
der Schritt f) ferner Folgendes umfasst:
f1) Zuweisen des möglichen G-Code-Befehls, der einen gleichzeitigen Kontakt zwischen einem gegebenen Werkzeug und zwei oder mehr geometrischen Merkmalen bei dem Maschinenbearbeitungsvorgang bewirkt, der das geometrische Merkmal betrifft, das durch das größte Volumen abgetragenen Materials gekennzeichnet ist.
f2) Bestimmen einer Merkmalkontrolldatei (303), die eine Menge von Informationen umfasst, die sowohl die geometrische Spezifikation als auch die Position und die Ausrichtung von jedem der in Schritt d) identifizierten geometrischen Merkmale betreffen.

9. Verfahren zum Umwandeln eines herkömmlichen linearen Teileprogramms (101) in ein nicht-lineares Teileprogramm,
**dadurch gekennzeichnet, dass:**
dieses Verfahren das Identifizieren der Maschinenbearbeitungsvorgänge umfasst, die gemäß dem herkömmlichen linearen Teileprogramm (101) und den entsprechenden in diesem herkömmlichen linearen Teileprogramm enthaltenen G-Code-Befehlen gemäß dem Verfahren nach einem der Ansprüche 1 bis 7 ausgeführt werden.

10. System, das geeignet ist, die Maschinenbearbeitungsvorgänge zu identifizieren, die gemäß einem Teileprogramm und den entsprechenden in diesem Teileprogramm enthaltenen G-Code-Befehlen ausgeführt werden, wobei dieses System geeignet ist, am Eingang dieses Teileprogramms (101) eine Bearbeitungswerkzeugbibliothek (104), welche geometrische Eigenschaften der Werkzeuge spezifiziert, die von der CNC-Maschine eingesetzt werden, für die dieses Teileprogramm (101) geschrieben wurde, und ein 3D-Modell (50) des Werkstücks zu empfangen;
**dadurch gekennzeichnet, dass:**
dieses System ein volumetrisches Modul (201) umfasst, das geeignet ist, um:
> das 3D-Modell (50) des Werkstücks auszuwerten, um die geometrischen Merkmale des Werkstücks zu identifizieren;
> die Ausführung des Teileprogramms (101) zu simulieren, um das Vorkommen von Kontakten zwischen den Werkzeugen und jedem der geometrischen Merkmale auf der Grundlage der geometrischen Eigenschaften der Werkzeuge, wie sie von der Bearbeitungswerkzeugbibliothek (104) spezifiziert werden, festzustellen;
**und dadurch, dass:**
dieses System ein Verwaltungsmodul (202) umfasst, das geeignet ist, um:
> die Maschinenbearbeitungsvorgänge und die entsprechenden in dem Teileprogramm (101) enthaltenen G-Code-Befehle auf der Grundlage der Feststellung von Kontakten zwischen den Werkzeugen und jedem der geometrischen Merkmale zu bestimmen;
> diese Maschinenbearbeitungsvorgänge und die entsprechenden G-Code-Dateien mit den in dem Teileprogramm (101) identifizierten G-Code-Befehlen auszugeben.

11. System nach Anspruch 10,
**dadurch gekennzeichnet, dass:**
das volumetrische Modul (201) ferner geeignet ist, um am Eingang ein 3D-Modell des Rohlings (103) zu empfangen, und das volumetrische Modul (201) ferner eine Maschinenbearbeitungssimulationseinheit (2011 e) umfasst, die geeignet ist, um den Materialabtragungsprozess an dem 3D-Modell des Rohlings (103) auf der Grundlage des Teileprogramms (101) und der Bearbeitungswerkzeugbibliothek (104) zu simulieren, um das 3D-Modell (50) des Werkstücks zu bestimmen.

12. System nach einem der Ansprüche 10 oder 11,
**dadurch gekennzeichnet, dass:**
das volumetrische Modul (201) ferner geeignet ist, ein 3D-Modell (60) von jedem der geometrischen Merkmale zu erzeugen.

13. System nach Anspruch 12,
**dadurch gekennzeichnet, dass:**
das volumetrische Modul (201) ferner eine Geometrieprüfeinheit (2012c), die geeignet ist, um gemeinschaftliche Prüfungen der 3D-Modelle von jedem der geometrischen Merkmale auszuführen, um die Merkmale zu unterscheiden, die durch sich überschneidende Volumina gekennzeichnet sind, und eine Konstruktionseinheit (2012d) umfasst, die geeignet ist, gegenseitige boolesche Subtraktionen unter den Volumina der geometrischen Merkmale, die durch sich überschneidende Volumina gekennzeichnet sind, auszuführen, um das gemeinsame Materialvolumen aus den 3D-Modellen der durch sich überschneidende Volumina gekennzeichneten geometrischen Merkmale zu löschen.

14. System nach einem der Ansprüche 10 bis 13,
**dadurch gekennzeichnet, dass:**
das volumetrische Modul (201) ferner eine Maschinenbearbeitungssimulationseinheit (2011 e) umfasst, die geeignet ist, um jeden der G-Code-Befehle des Teileprogramms (101) zu identifizieren, der das Vorkommen eines Kontakts zwischen mindestens einem der Werkzeuge und mindestens einem der geometrischen Merkmale bewirkt.

15. System nach Anspruch 14,
**dadurch gekennzeichnet, dass:**
die Maschinenbearbeitungssimulationseinheit (2011 e) ferner geeignet ist, um für jeden identifizierten G-Code-Befehl das während des Kontakts mit dem Werkzeug vom geometrischen Merkmal abgetragene Materialvolumen zu berechnen.

16. System nach Anspruch 14,
**dadurch gekennzeichnet, dass:**
die Maschinenbearbeitungssimulationseinheit (2011 e) ferner geeignet ist, um jeden der G-Code-Befehle zusammen mit den Informationen über das berechnete Volumen abgetragenen Materials, das Werkzeug und das von dem Kontakt betroffene geometrische Merkmal in einer temporären Datei zu speichern.

17. System nach einem der Ansprüche 10 bis 16,
**dadurch gekennzeichnet, dass:**
das Verwaltungsmodul (202) ferner ein Untermodul (2022) zum Erzeugen einer G-Code-Datei umfasst, das geeignet ist, um: den möglichen G-Code-Befehl zuzuweisen, der einen gleichzeitigen Kontakt zwischen einem gegebenen Werkzeug und zwei oder mehr geometrischen Merkmalen bei dem Maschinenbearbeitungsvorgang bewirkt, der das geometrische Merkmal betrifft, das durch das größte Volumen abgetragenen Materials gekennzeichnet ist; eine Merkmalkontrolldatei (303) zu bestimmen, die eine Menge von Informationen umfasst, die sowohl die geometrische Spezifikation als auch die Position und die Ausrichtung von jedem der geometrischen Merkmale des 3D-Modells (50) des Werkstücks betreffen.

18. System zum Umwandeln eines herkömmlichen linearen Teileprogramms (101) in ein nicht-lineares Teileprogramm,
**dadurch gekennzeichnet, dass:**
dieses System ein System umfasst, das geeignet ist, um den Maschinenbearbeitungsvorgang zu identifizieren, der gemäß dem herkömmlichen linearen Teileprogramm (101) und den entsprechenden G-Code-Befehlen nach einem der Ansprüche von 10 bis 17 ausgeführt wird.

## Revendications

1. Procédé pour identifier automatiquement les opérations d'usinage exécutées suivant un programme pièce (101) et les instructions de code G correspondantes contenues dans ledit programme pièce (101), ledit procédé comprenant les étapes suivantes :
a) la fourniture dudit programme pièce (101) ;
b) la fourniture d'une bibliothèque d'outils d'usinage (104) spécifiant les propriétés géométriques des outils utilisés par la machine-outil à commande numérique pour laquelle ledit programme pièce (101) a été écrit ;
c) la fourniture d'un model 3D (50) de la pièce usinée ; **caractérisé en ce que** :
ledit procédé comprend en outre les étapes suivantes :
d) l'identification de éléments géométriques de la pièce usinée en évaluant ledit modèle 3D (50) ;
e) la simulation de l'exécution dudit programme pièce (101) de manière à détecter la survenance de contacts entre lesdits outils et chacun desdits éléments géométriques sur la base des propriétés géométriques des outils telles que spécifiées par ladite bibliothèque d'outils d'usinage (104) ;
f) la détermination des opérations d'usinage et des instructions de code G correspondantes contenues dans ledit programme pièce (101) sur la base de la détection de contacts effectuée dans l'étape e).

2. Procédé selon la revendication 1,
**caractérisé en ce que** :
ladite étape c) comprend :
c1) la fourniture d'un modèle 3D de la pièce brute (103) ;
c2) la détermination dudit modèle 3D (50) de la pièce usinées sur la base d'une simulation du processus d'enlèvement de matière sur ledit modèle 3D de la pièce brute (103), ladite simulation du processus d'enlèvement de matière étant effectuée sur la base dudit programme pièce (101) et de ladite bibliothèque d'outils d'usinage (104).

3. Procédé selon une des revendications 1 ou 2,
**caractérisé en ce que** :
ladite étape d) comprend en outre :
d1) la génération d'un modèle 3D (60) de chacun desdits éléments géométriques.

4. Procédé selon la revendication 3,
**caractérisé en ce que** :
ladite étape d) comprend en outre : d2) l'exécution de vérifications de jonctions sur les modèles 3D de chacun desdits éléments géométriques de manière à distinguer les éléments géométriques **caractérisés par** des volumes entrecroisés ;
d3) l'exécution de soustractions booléennes réciproques parmi les volumes desdits éléments géométriques **caractérisés par** des volumes entrecroisés de manière à éliminer le volume de matière commun des modèles 3D desdits éléments géométriques **caractérisés par** des volumes entrecroisés.

5. Procédé selon une des revendications 1 à 4,
**caractérisé en ce que** :
ladite étape e) comprend en outre :
e1) l'identification de chacune des instructions de code G dudit programme pièce (101) qui entraîne un contact entre au moins un desdits outils et au moins un desdits éléments géométriques.

6. Procédé selon la revendication 5,
**caractérisé en ce que** :
ladite étape e) comprend en outre :
e2) pour chaque instruction de code G identifiée dans ladite étape e1), le calcul du volume de matière enlevé de l'élément géométrique durant le contact avec l'outil.

7. Procédé selon la revendication 5,
**caractérisé en ce que** :
ladite étape e) comprend en outre :
e3) le stockage de chacune desdites instructions de code G identifiées dans ladite étape e1) dans un fichier temporaire conjointement aux informations concernant le volume de matière enlevé lors du calcul dans ladite étape e2), l'outil et l'élément géométrique impliqué dans le contact.

8. Procédé selon une des revendications 1 à 7,
**caractérisé en ce que** :
ladite étape f) comprend en outre :
f1) l'assignation de l'éventuelle instruction de code G qui entraîne un contact simultané entre un outil donné et au moins deux éléments géométriques à l'opération d'usinage concernant cet élément géométrique **caractérisé par** le plus grand volume de matière enlevé ;
f2) la détermination d'un fichier d'inspection d'éléments (303) comprenant un ensemble d'informations concernant la spécification géométrique ainsi que la position et l'orientation de chacun desdits éléments géométriques identifiés dans l'étape d).

9. Procédé pour convertir un programme pièce linéaire traditionnel (101) en un programme pièce non linéaire,
**caractérisé en ce que** :
ledit procédé comprend l'identification des opérations d'usinage exécutées suivant ledit programme pièce linéaire traditionnel (101) et des instructions de code G correspondantes contenues dans ledit programme pièce linéaire traditionnel suivant le procédé selon une des revendications 1 à 7.

10. Système adapté pour identifier les opérations d'usinage exécutées suivant un programme pièce et les instructions de code G correspondantes contenues dans ledit programme pièce, dans lequel ledit système est adapté pour recevoir en entrée ledit programme pièce (101), une bibliothèque d'outils d'usinage (104) spécifiant les propriétés géométriques des outils utilisés par la machine-outil à commande numérique pour laquelle ledit programme pièce (101) a été écrit et un model 3D (50) de la pièce usinée ; **caractérisé en ce que** :
ledit système comprend un module volumétrique (201) adapté pour :
> évaluer ledit modèle 3D (50) de la pièce usinée de manière à identifier les éléments géométriques de la pièce usinée ;
> simuler l'exécution dudit programme pièce (101) de manière à détecter la survenance de contacts entre lesdits outils et chacun desdits éléments géométriques sur la base des propriétés géométriques des outils telles que spécifiées par ladite bibliothèque d'outils d'usinage (104) ;
et **en ce que** :
ledit système comprend un module de gestion (202) adapté pour :
> déterminer les opérations d'usinage et les instructions de code G correspondantes contenues dans ledit programme pièce (101) sur la base de la détection de contacts entre lesdits outils et chacun desdits éléments géométriques ;
> délivrer en sortie lesdites opérations d'usinage et lesdits fichiers de code G correspondants avec les instructions de code G identifiées dans ledit programme pièce (101).

11. Système selon la revendication 10,
**caractérisé en ce que** :
ledit module volumétrique (201) est adapté en outre pour recevoir en entrée un modèle 3D de la pièce brute (103) et ledit module volumétrique (201) comprend en outre une unité de simulation d'usinage (2011e) adaptée pour simuler le processus d'enlèvement de matière sur ledit modèle 3D de la pièce brute (103) sur la base dudit programme pièce (101) et de ladite bibliothèque d'outils d'usinage (104) de manière à déterminer ledit model 3D (50) de la pièce usinée.

12. Système selon une des revendications 10 ou 11,
**caractérisé en ce que** :
ledit module volumétrique (201) est adapté en outre pour générer un modèle 3D (60) de chacun desdits éléments géométriques.

13. Système selon la revendication 12,
**caractérisé en ce que** :
ledit module volumétrique (201) comprend en outre une unité de vérification de géométrie (2012c) adaptée pour effectuer des vérifications de jonctions sur les modèles 3D de chacun desdits éléments géométriques de manière à distinguer les éléments **caractérisés par** des volumes entrecroisés et une unité de conception (2012d) adaptée pour effectuer des soustractions booléennes réciproques par les volumes desdits éléments géométriques caractérisés parmi des volumes entrecroisés de manière à éliminer le volume de matière commun des modèles 3D desdits éléments géométriques **caractérisés par** des volumes entrecroisés.

14. Système selon une des revendications 10 à 13,
**caractérisé en ce que** :
ledit module volumétrique (201) comprend en outre une unité de simulation d'usinage (2011e) adaptée pour identifier chacune des instructions de code G dudit programme pièce (101) qui entraîne la survenance d'un contact entre au moins un desdits outils et au moins un desdits éléments géométriques.

15. Système selon la revendication 14,
**caractérisé en ce que** :
ladite unité de simulation d'usinage (2011e) est adaptée en outre pour calculer, pour chaque instruction de code G identifiée, le volume de matière enlevé de l'élément géométrique durant le contact avec l'outil.

16. Système selon la revendication 14,
**caractérisé en ce que** :
ladite unité de simulation d'usinage (2011e) est adaptée en outre pour stocker chacune desdites instructions de code G dans un fichier temporaire conjointement aux informations concernant le volume de matière enlevé calculé, l'outil et l'élément géométrique impliqué dans le contact.

17. Système selon une des revendications 10 à 16,
**caractérisé en ce que** :
ledit module de gestion (202) comprend en outre un sous-module de génération de fichiers de code G (2022) adapté pour : assigner l'éventuelle instruction de code G qui entraîne un contact simultané entre un outil donné et deux ou plusieurs éléments géométriques à l'opération d'usinage concernant cet élément géométrique **caractérisé par** le plus grand volume de matière enlevé ; déterminer un fichier d'inspection d'éléments (303) comprenant un ensemble d'informations concernant la spécification géométrique ainsi que la position et l'orientation de chacun desdits éléments géométriques dudit modèle 3D (50) de la pièce usinée.

18. Système pour la conversion d'un programme pièce linéaire traditionnel (101) en un programme pièce non linéaire,
**caractérisé en ce que** :
ledit système comprend un système adapté pour identifier les opérations d'usinage exécutées suivant ledit programme pièce linéaire traditionnel (101) et les instructions de code G correspondantes selon une des revendications 10 à 17.
